# EUROPEAN PATENT SPECIFICATION

(11) **EP 1 278 310 B1**
(45) Date of publication and mention of the grant of the patent: **25.02.2009**
(21) Application number: 02015645.1
(22) Date of filing: 16.07.2002
(51) Int. Cl.: H04B 7/185

(54) **Mobile satellite communication network, system and method, program and computer-readable storage medium therefore**
Netz, System and Verfahren für mobile Satellitenkommunikation, Program und Komputer lesbares Speichermedium dafür
Réseau, system et méthode de communications mobiles par satellite, programme et mémoire lisible par calculateur à cet effet

(30) Priority: 17.07.2001 JP 2001216953
(43) Date of publication of application: 22.01.2003
(73) Proprietor: NTT DoCoMo, Inc., Tokyo 100-6150 (JP)
(72) Inventor: Hisashi, Matsuoka, Int.Prop.Dep. NTT DoCoMo Inc., Chiyoda-ku, Tokyo 100 6150 (JP); Masaaki, Yoshimi, Int.Prop.Dep. NTT DoCoMo Inc., Chiyoda-ku, Tokyo 100 6150 (JP); Kazumasa, Nitta, Int.Prop.Dep. NTT DoCoMo Inc., Chiyoda-ku, Tokyo 100 6150 (JP); Takashi, Ono, Int.Prop.Dep. NTT DoCoMo Inc., Chiyoda-ku, Tokyo 100 6150 (JP)
(74) Representative: Viering, Jentschura & Partner

(56) References cited:
- EP-A- 0 869 628
- EP-A- 0 909 043
- EP-A- 1 069 793
- EP-A- 1 109 333
- WO-A-01/17294
- WO-A-96/34503
- GB-A- 2 322 521

## Description

### BACKGROUND OF THE INVENTION

### Field of the Invention

The present invention relates to a mobile communication network forming device etc, which provides a mobile communication service in the specified wireless zone.

### Related Background Art

Mobile communication systems enabling connection of a satellite zone with comparatively low subscriber density to a mobile communication network have previously been proposed, for example in Japanese Patent Laid-open H. 9-219881. According to this system, even in case where it is difficult to install a leased line, a service area can be expanded by arranging a base station in satellite zones where no mobile communication service is provided, and connecting such base station to the existing switch network using an entrance device (ground-based or satellite wireless line) that performs communication using microwaves.

However, a system as described above is problematic in that since even in the case of communication between the mobile stations both of which are under the control of the base station the signals for such communication go through the satellite entrance line, heavy traffic is generated on the satellite entrance line.

For solving above-mentioned problem, it is an object of the present invention to provide a mobile communication network forming device etc, which can reduce the traffic volume generated on the satellite entrance line. See EP-A-1 109 333 (SAMSUNG) and WO-A-01/17294 (MOTOROLA).

### SUMMARY OF THE INVENTION

In order to achieve the above object, a device of the present invention comprises the following means. Specifically, a base station function section that forms a wireless zone, subscriber switching means that perform connection exchange between mobile stations that are in range in said wireless zone and in-range management of mobile stations that are in range in said wireless zone, and satellite gateway switching means that perform mutual connection between another communication network and a mobile station that is in range in said wireless zone through a communication satellite.

The communication with the other network is performed only via the satellite subscriber switching means are provided with storage means for storing the registration information and subscriber information of a mobile station that is in range in said wireless zone.

Since a base station function and subscriber switching function are provided, the communication area is expanded and communication between mobile stations that are under the control of this device can be achieved without going through the satellite entrance line, thereby reducing the traffic volume generated on the satellite entrance line.

In order to achieve the above object, a method of the present invention comprises the following steps. Specifically, a connection request acceptance step accepting from a mobile station in range of a wireless zone formed by a base station function section of a mobile communication network forming device a connection request for requesting connection with another communication terminal, a in-range determination step determining whether said other communication terminal is in range of said wireless zone or not, and a connection execution step executing the connection between said mobile station and said other communication terminal using a subscriber switching means in case said other communication terminal is determined to be in range of said wireless zone in said in-range determination step, and executing the mutual connection between said mobile station and the other communication network via a communication satellite in case said other communication terminal is determined to be not in range of said wireless zone in said in-range determination step.

The communication with the other network is performed only via the satellite registration information and subscriber information of a mobile station that is in range in the wireless zone are stored at storage means.

An execution of the mutual connection between the mobile station and the other communication network via the communication satellite enables the formation of local mobile communication area in the region which is not covered by existing communication network. On the other hand, since in case the communication terminal which is a connection destination is in range of the wireless zone formed by the mobile communication network forming device, the connection between the mobile station and the relevant communication terminal is executed by the subscriber switching means of the mobile communication network forming device. The communication between mobile stations which are under the control of the mobile communication network forming device without going through the communication satellite becomes possible, thereby reducing the traffic volume generated on the satellite entrance line.

The communication with the other network is performed only via the satellite. The stored registration information and subscriber information are processed.

### BRIEF DESCRIPTION OF THE DRAWINGS

Figure 1 is a view illustrating the concept of a mobile communication system according to an embodiment of the present invention;
Figure 2 is a view illustrating the structure of a mobile communication system according to an embodiment of the present invention;
Figure 3 is a view illustrating the structure of mobile communication network forming device 10;
Figure 4 is a sequence chart illustrating the operation relating to position registration of a mobile station;
Figure 5 is a sequence chart illustrating the operation relating to call origination;
Figure 6 is a sequence chart illustrating the operation relating to call termination;
Figure 7 is a sequence chart relating to communication between terminals under the control of local mobile telephone network 50; and
Figure 8 is a sequence chart relating to disconnection processing and charging processing.

### DESCRIPTION OF THE PREFERRED EMBODIMENTS

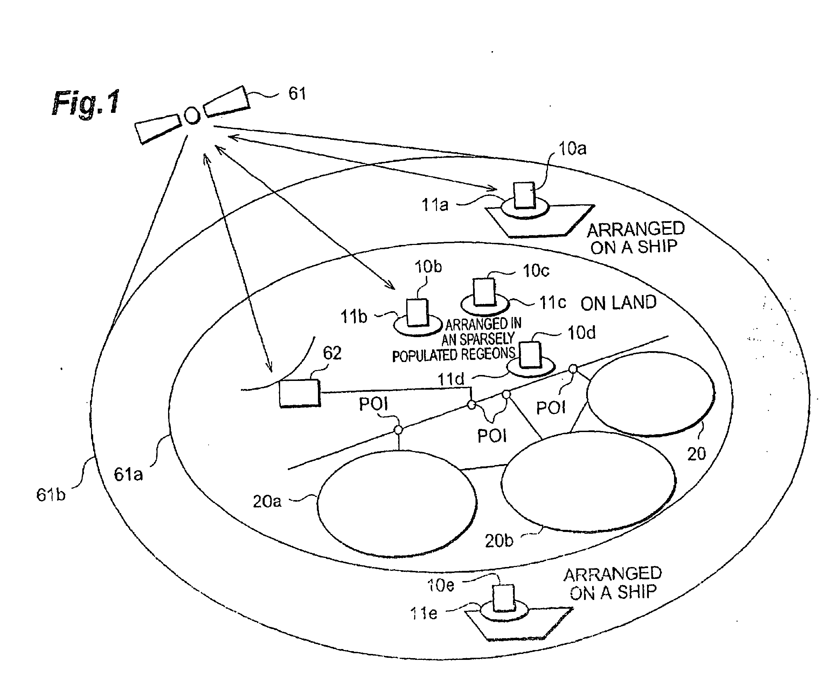

Figure 1 is a view illustrating the concept of a mobile communication system according to an embodiment of the present invention. In this embodiment, devices 10a to 10e and a ground-based mobile communication network 20, each forming a mobile communication network, are provided by the same specified communication service provider. Mobile communication network forming devices 10a to 10e form respective wireless zones 11a to lie and provide mobile communication service for the mobile stations under their control. Since mobile communication network forming devices 10a to 10e have a gateway switching function, they can be installed in any location so long as a drive power source is available. For example, as in the case of mobile communication network forming devices 10a and 10e, they could be installed on ships which are at anchor at sea or in motion at sea, where wired connection with an switch network is difficult. Also, as in the case of mobile communication network forming devices 10b to 10d, they could be installed in sparsely populated regions and a mobile communication service is not previously provided.

Since mobile communication network forming devices 10a to 10e have a base station function and subscriber system switching function, they form a local mobile communication network. And also, communication between mobile stations under their control thus becomes possible. In this case, the user signals do not pass through the satellite entrance line. Moreover, service control, call control, various types of signal processing and the charging count etc in respect of the mobiles are independently performed by each of the mobile communication network forming devices 10a to 10e.

Also, since mobile communication network forming devices 10a to 10e have a satellite communication function and gateway switching function, communication between mobile stations under their control and other communication networks is possible. In this connection, "other communication networks" is defined as following; Firstly, (1) a communication network provided by the aforementioned specified communication service provider, wherein in order to perform communication therewith, it is necessary to pass through a point of interface (hereinbelow termed "POI"); and secondly, (2) communication networks provided by communication service providers other than the aforementioned specified communication service provider, to which roaming is possible irrespective of the communication method employed. For example, the ground-based communication network 20 corresponds to other communication network of (1) for communication network forming device 10a. And, a mobile communication network 20a provided by other communication service provider (other company) and a fixed line communication network 20b provided by other company corresponds to other communication network of (2) for mobile communication network forming device 10a. The other communication networks are not restricted to this communication system and could be for example W-CDMA or PDC or fixed line networks.

As shown in Figure 1, communication satellite 61 covers a sea area 61b as well as a land area 61a. Mobile communication network forming devices 10a to 10e that are arranged in sea area 61b are connected with the POI through a satellite entrance line. That is, the wireless signals sent from mobile communication network forming devices 10a to 10e are received by ground-based satellite base station 62 through communication satellite 61 and sent to the POI. Also, the signals sent from ground-based mobile communication network 20, mobile communication network 20a provided by other company or fixed line communication network 20b provided by other company are transmitted to mobile communication network forming devices 10a to 10e through the POI, ground-based satellite base station 62 and communication satellite 61.

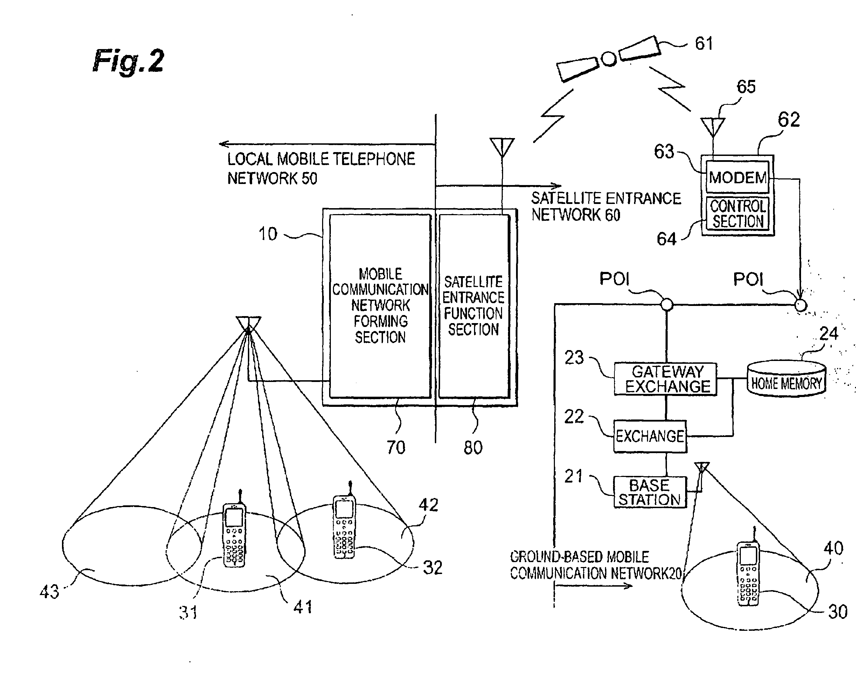

Figure 2 is a view illustrating the structure of a mobile communication system according to an embodiment of the present invention. Ground-based communication network 20 is a network that provides mobile communication service and is constituted by a base station 21 forming a wireless zone, subscriber-based exchange 22 that performs service control, call control, various types of signalprocessing and charging, and gateway exchange 23 that per forms mutual connection with other networks. Home memory 24 stores subscriber information and the registration information of mobile stations 30 to 32.

Mobile stations 30 to 32 are provided communication service by the specified communication service provider, which operates local mobile telephone network 50 formed by a mobile communication network forming section 70 of a mobile communication network forming device 10 and ground-based mobile communication network 20.

Mobile communication network forming device 10 comprises mobile communication network forming section 70 that provides mobile communications service to mobile stations 31 and 32 and satellite entrance function section 80 that realizes satellite entrance for connection with the POI. Mobile communication network forming section 70 forms zones 41 to 43, in which mobile stations 31 and 32 can receive mobile communication services. Satellite entrance function section 80 performs satellite communication with ground-based satellite base station 62 through communication satellite 61.

Ground-based satellite base station 62 comprises an antenna 65 that sends and receives signals, a modem 63 that performs modulation and demodulation of signals and a control section 64 that performs satellite wireless line control and is connected with the POI through a leased line. Ground-based satellite base station 62 receives signals transmitted from satellite entrance function section 80 through communications satellite 61 and transmits these to the POI. It also receives signals from the POI and sends these to the satellite entrance function section 80 through communication satellite 61.

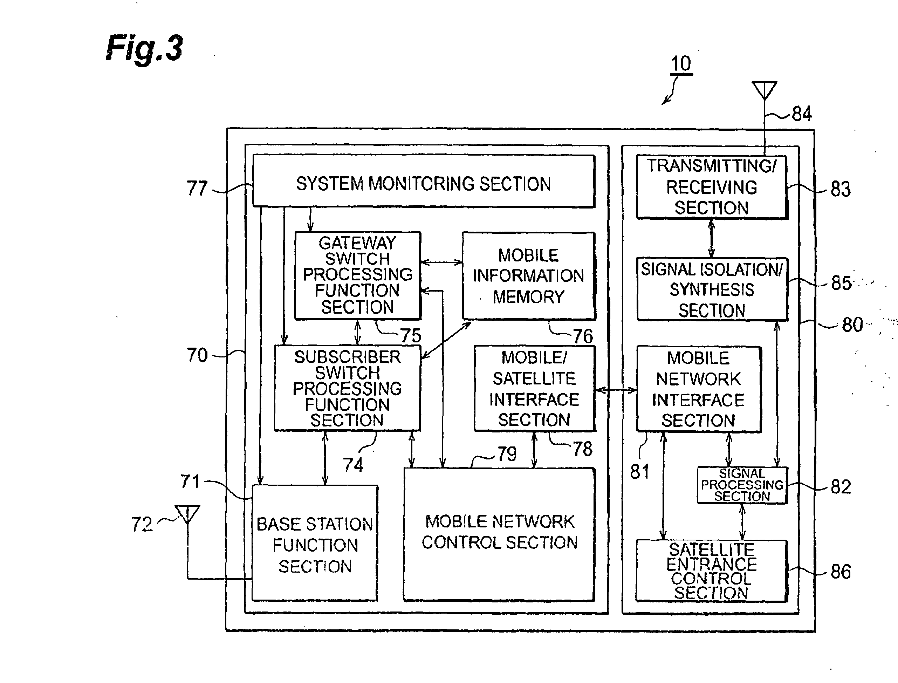

Figure 3 is a view showing the structure of a mobile communication network forming device 10. In mobile communication network forming section 70, base station function section 71 forms zones 41 to 43 and performs transmission and reception of signals, modulation and demodulation, and wireless management. Antenna section 72 exchanges electromagnetic waves with mobile stations 31 and 32. Subscriber switch processing function section 74 performs management, including in-range management, such as service control, call control, various types of signal processing and charging counting. In this invention, "in-range management" indicates the management to determine whether a mobile station is in range of the wireless zone formed by the mobile communication network forming device or not. Gateway switch processing function section 75 performs signal processing when mutual connection is performed with other network. Mobile information memory 76 stores the registration information and subscriber information of mobile stations 31 and 32. System monitoring section 77 performs monitoring of the entire local mobile telephone network 50. Mobile/satellite interface section 78 performs signal reception-and transmission with the satellite entrance function section 80 upon communication via the satellite. Mobile network control section 79 controls transmission of various types of signals in base station function section 71, subscriber switch processing function section 74, gateway switch processing function section 75, mobile information memory 76 and mobile/satellite interface section 78. By means of the above, mobile communication network forming section 70 provides the same service to mobile stations 31 and 32 as does ground-based mobile communication network 20.

When mobile stations 31, 32 perform communication with other network, satellite entrance function section 80 has the function of performing transmission of information to and from ground-based satellite base station 62 via communication satellite 61 in order to connect with the POI using satellite entrance network 60. It also transmits a roaming signal for connection with the other network, a user signal and information of mobiles that are within range in local mobile telephone network 50. Mobile network interface section 81 serves as a signal transmission interface with mobile communication network forming section 70. A signal processing section 82 performs processing of signals from mobile communication network forming section 70 and signals from the satellite line. A transmission/reception section 83 performs transmission/reception of signals to/from the satellite through a satellite antenna section 84. A signal isolation/synthesizing section 85 performs signal isolation and synthesis. A satellite entrance control section 86 performs control of the entire satellite entrance function section 80.

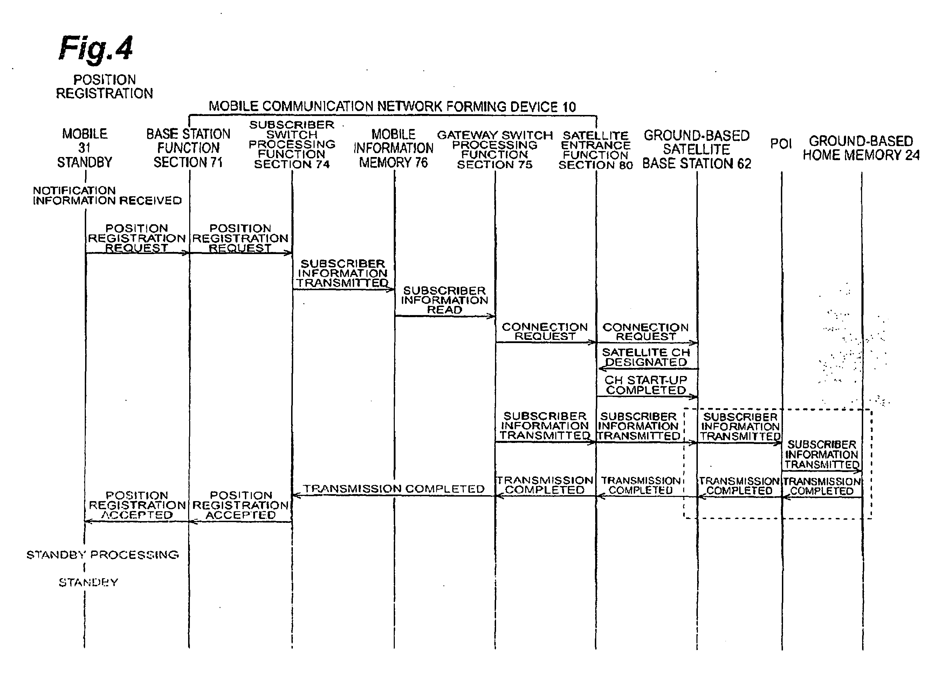

Next, the operation of a mobile communication system according to the embodiment of the present invention constructed as above will be described. Figure 4 is a sequence chart showing the operation relating to position registration of a mobile station. When a mobile station 31 is in standby mode in zone 40 in ground-based mobile communication network 20, the information that it is within range is registered in home memory 24 as registration information. Here, it is assumed that mobile station 31 has moved out of range of zone 40, which is the service area of ground-based mobile communication network 20, into zone 41 which is formed by mobile communication network forming device 10. In zone 41, upon received notification information mobile station 31 transmits a signal requesting position registration to mobile communication network forming device 10. The position registration request signal sent frommobile station 31 is transferred to base station function section 71 and subscriber switch processing function section 74. Gateway switch processing function section 75 then stores the information of mobile station 31 in mobile information memory 76.

Gateway switch processing function section 75 makes a connection request to satellite entrance function section 80 after reading the subscriber information from mobile information memory 76. When mobile network control section 79 recognize? that gateway switch processing function section 75 has transmitted a connection request signal, it starts up mobile/satellite interface section 78, causing a signal requesting connection with the satellite entrance line to be sent to mobile network interface section 81 of satellite entrance function section 80. When satellite entrance control section 86 monitoring mobile network interface section 81, receives a connection request signal from mobile network interface section 81, it transmits a connection request signal to communication satellite 61 through signal processing section 82, signal isolation/synthesis section 85, transmission/reception section 83 and satellite antenna section 84.

When ground-based satellite base station 62 receives the connection request signal relayed by communication satellite 61, it specifies a wireless channel in the satellite zone by means of instructions from control section 64. After satellite entrance function section 80 has established synchronization of the specified wireless channel, it returns "satellite channel start-up completed" to ground-based satellite base station 62. Gateway switch processing function section 75 transfers the subscriber information ant the registration information to ground-based satellite base station 62 through satellite entrance function section 80. That is, it notifies the ground-based home memory 24 of the specified communications service provider that is nearest to the POI, using the satellite entrance line, of the fact that mobile station 31 is in range in the zone 41 formed by mobile communication network forming device 10. Connection of an incoming call with mobile station 31 thereby becomes possible. Note that a substitution could be made by installing a control section and home memory corresponding to ground-based home memory 24 in control section 64 in ground-based satellite base station 62. After completion of communication as above, position registration is completed and mobile station 31 performs standby processing.

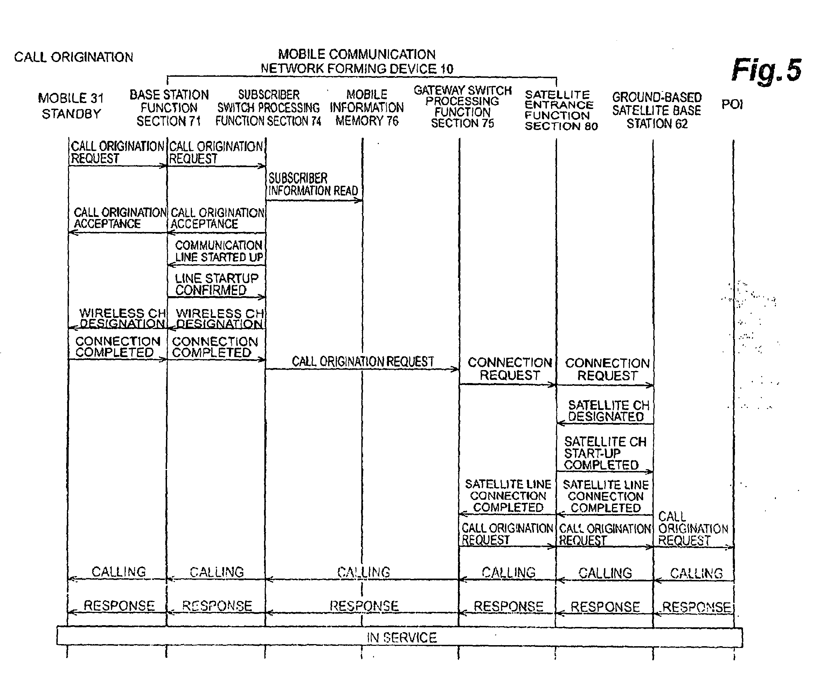

Next, the case will be described where mobile station 31 performs call origination to a terminal under the control of mobile communication network 20a provided by other company, fixed communication network 20b provided by other company or ground-based mobile communication network 20 which is a communication network of the specified communication service provider. Figure 5 is a sequence chart showing the operation relating to call origination. Mobile station 31 which is in standby in the range of local mobile telephone network 50 sends a call origination request signal to base station function section 71. Base station function section 71 transmits the call origination request signal to subscriber switch processing function section 74. Subscriber switch processing function section 74 reads the information relating to the mobile station 31 from mobile information memory 76 and if it determines that communication is possible returns a call origination acceptance signal to mobile station 31 through base station function section 71. It also sends a signal for starting up the communication line to base station function section 71. Base station function section 71 determines a frequency band capable of being used in zone 41 and starts up a communication line, thereafter returns confirmation of line start-up to the subscriber switch processing function section 74.

If subscriber switch processing function section 74 determines that the line connection destination of the call origination request from mobile station 31 is a mobile communication network 20a provided by other company, a fixed communication network 20b provided by other company or a ground-based mobile communication network 20, it sends a call origination request signal to gateway switch processing function section 75. When mobile network control section 79 recognizes that gateway switch processing function section 75 has received a call origination request signal, it starts up mobile/satellite interface section 78 to transmit to mobile network interface section 81 of sateilite entrance function section 80 a signal requesting connection of the satellite entrance line. When the satellite entrance control section 86, which monitors mobile network interface section 81, receives a connection request signal from mobile network interface section 81, it sends a connection request signal to communication satellite 61 through a signal processing section 82, signal isolation/synthesis section 85, transmission/receiving section 83 and satellite antenna section 84.

When ground-based satellite base station 62 receives a connection request signal relayed by communication satellite 61, it specifies a wireless channel of the satellite zone in accordance with the instructions from control section 64. After satellite entrance function section 80 has established synchronization of the designated wireless channel, it returns "satellite channel start-up completed" to ground-based satellite base station 62. Ground-based satellitebase station 62 transmits a satellite line connection completion signal indicating that the satellite entrance zone has been started up normally. When satellite entrance function section 80 has received this satellite line connection completion signal it transfers a satellite line connection completion signal to gateway switch processing function section 75 through mobile network interface section 81. When gateway switch processing function section 75 recognizes that the satellite entrance zone has been started up normally, it sends a call origination request signal to satellite entrance function section 80. Satellite entrance function section 80 sends a call origination request signal to the POI using satellite entrance network 60. After the line connection procedure to the call-receiving party on mobile communication network 20a provided by other company, fixed communication network 20b provided by other company or ground-based mobile communication network 20 provided by the specified communication service provider, a calling signal indicating that the party to be connected is being called and the response signal indicating that this party has responded are transmitted through the POI, whereupon the response signal is notified to the mobile station 31 through satellite entrance network 60 and mobile communication network forming device 10. After this procedure, call service (communication) is commenced.

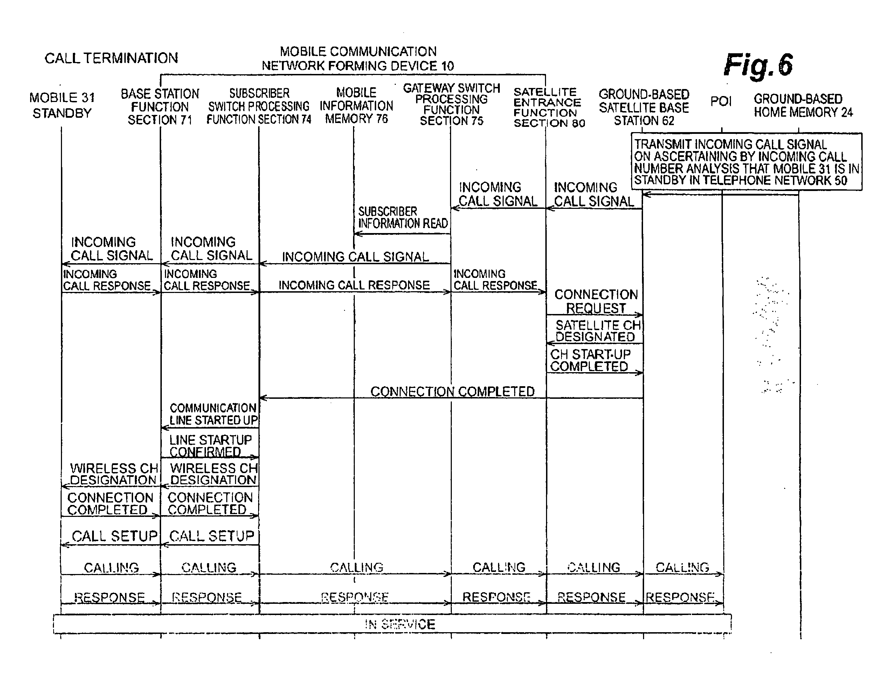

Next, a case where mobile station 30 under the control of mobile communication network 20a provided by other company, fixed communication network 20b provided by other company or ground-based mobile communication network 20 provided by the specified communication service provider has originated a call to mobile station 31 will be described. Figure 6 is a sequence chart showing the operation relating to call termination. Upon receiving an incoming call signal, gateway exchange 23 of ground-based mobile communication network 20 recognizes that mobile station 31 is in range in local mobile telephone network 50 by referring to home memory 24. Gateway exchange 23 transfers an incoming call signal to ground-based satellite base station 62 through the POI. Ground-based satellite base station 62 sends an incoming call signal to satellite entrance function section 80 using a common channel.

Satellite entrance control section 86 transfers an incoming call signal tomobile communication network forming section 70 through mobile network interface section 81. Mobile network control section 79 transfers the incoming call signal received through mobile/satellite interface section 78 to gateway switch processing function section 75. After analyzing the incoming call signal, gateway switch processing function section 75 reads and checks the subscriber information corresponding to the incoming call number from mobile information memory 76 and transfers the incoming call signal to subscriber switch processing function section 74. Base station function section 71 sends the incoming call signal. received from subscriber switch processing function section 74 to the wireless zone using the general calling channel.

Mobile station 31 sends an incoming call response indicating that it has received an incoming call and this incoming call response signal is sent to satellite entrance function section 80 through base station function section 71, subscriber switch processing function section 74, gateway switch processing function section 75 and mobile/satellite interface section 78. On receipt of the incoming call response, satellite entrance function section 80 starts up the satellite entrance line and establishes synchronization and notifies subscriber switch processing function section 74 of start-up of the satellite entrance line. After this, call set-up is performed by starting up the communication line in local mobile telephone network 50, designation of the wireless channel and notification of completion of the connection (the same procedure as in the case of the call origination sequence) and a call to the effect that the user is being called and a response signal indicating that the user has responded are sent to the call originating terminal through local mobile telephone network 50, satellite entrance network 60 and the POI. Service is then commenced.

If a control section and memory corresponding to home memory 24 are provided in ground-based satellite base station 62, it is possible for ground-based satellite base station 62 to be made to recognize that the in-range area of mobile station 31 is in local mobile telephone network 50.

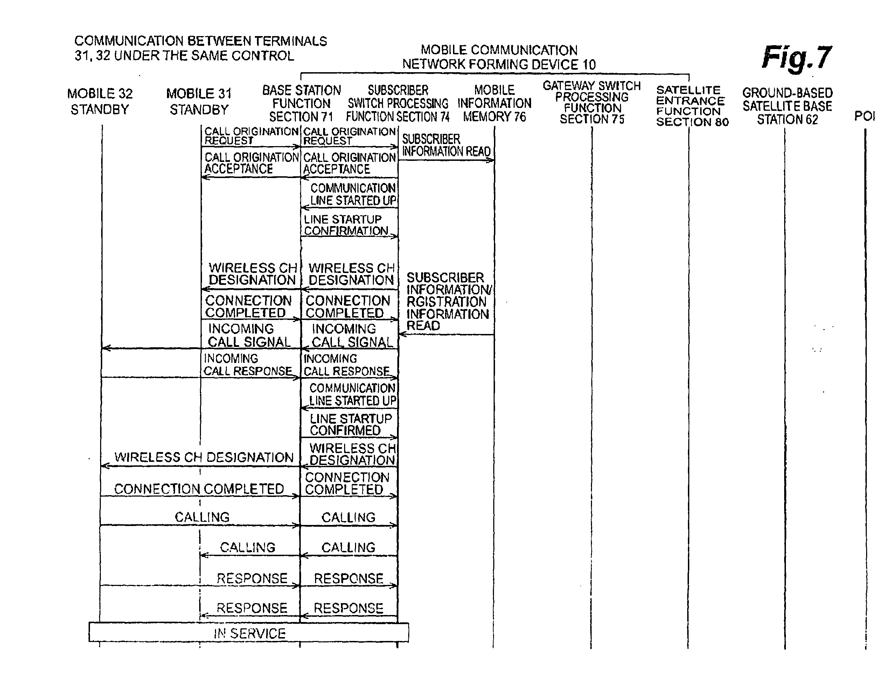

Next, the case will be described in which communication between terminals under the control of local mobile telephone network 50 formed by mobile communication network forming device 10 is performed. Figure 7 is a sequence chart relating to communication between terminals under the control of local mobile telephone network 50. The case where mobile station 31 has originated a call to mobile station 32 will now be described. Upon receiving a call origination request, after reading and checking the subscriber information of mobile station 31, subscriber switch processing function section 74 returns the acceptance of call origination request to mobile station 31, and then starts up the communication line with mobile station 31. Subsequently, after recognizing that mobile station 32 which is the connection destination is under the control of local communication telephone network 50 by referring to the subscriber information and registration information, subscriber switch processing function section 74 transmits an incoming call signal to base station function section 71. Base function section 71 sends the incoming call signal for mobile station 32. Upon receiving an incoming call response sent by mobile station 32, subscriber switch processing function section 74 starts up the communication line with mobile station 32. Further, upon receiving a response signal indicating that the user has responded, subscriber switch processing function section 74 connects the communication line with mobile station 31 and the communication line with mobile station 32.

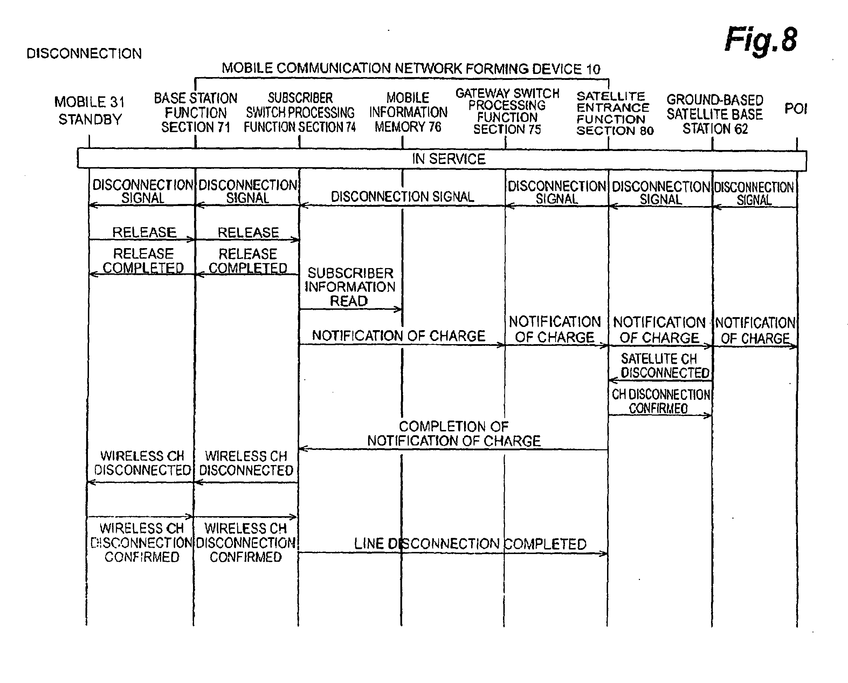

Next, disconnection and charging of a terminal under the control of local mobile telephone network 50 will be described. Figure 8 is a sequence chart relating to disconnection processing and charging processing. when a disconnection request is generated from mobile communication network 20a provided by other company, fixed communication network 20b provided by other company or a terminal or ground-based mobile communication network 20 of the specified communication service provider which was communicating with mobile station 31 under the control of local mobile telephone network 50, a disconnection request signal is sent through satellite entrance network 60 and local mobile telephone network 50. Mobile station 31 sends a release signal to subscriber switch processing function section 74 in response to the disconnection signal. Completion of release is communicated to mobile station 31. Subscriber switch processing function section 74 stores information such as subscriber information indicating termination of communication and charging count in mobile information memory 76 and sends the charge information incurred in the present communication session to the home memory 24 nearest from ground-based satellite base station 62 through satellite entrance network 60, communication satellite 61, ground-based satellite base station 62 and the POI. If ground-based satellite base station 62 is provided with a memory and control section having the same functions as home memory 24, transmission may be effected to this memory.

After this, ground-based satellite base station 62 sends to satellite entrance function section 80 satellite channel disconnection signal indicating disconnection of the satellite line and, after satellite entrance function section 80 has sent channel disconnection confirmation and satellite line disconnection has been performed by satellite entrance control section 86, disconnection completion signal indicating completion of disconnection of the satellite entrance line is sent to gateway switch processing function section 75 and subscriber switch processing function section 74. After this, a wireless channel disconnection signal that disconnects the wireless line with mobile station 31 is sent to mobile station 31, causing mobile station 31 to transmit channel disconnection confirmation and perform line disconnection; completion of line disconnection is then notified to satellite entrance function section 80 from subscriber switch processing function section 74.

As described above, with the mobile communication system according to this embodiment of the present invention, since a base station function and subscriber switch function are provided, the mobile communication area is expanded and communication between mobile stations under the control of this device can be achieved without passing through the satellite entrance line. As a result, this device makes it possible to reduce the traffic volume generated on the satellite entrance line. Also, this device is provided with a satellite communication function and gateway switching function. Since, by means of it, a mobile station under the control of this device and other communication network is connected through satellite communication and wireless communication, a mobile communication service can be provided even in locations where wired connection between the base station and exchange is difficult. For example, areas where no mobile communications service is provided or areas around ships can be covered. Furthermore, since a local mobile communication network is formed, communication between mobile stations which are under the control of this device becomes possible and communication with other communication networks also becomes possible.

## Claims

1. A mobile communication network forming device (10, 10a,..., 10e) comprising:
a base station function section (71) that forms a wireless zone (41, 42, 43);
subscriber switching means (74) that perform connection exchange between mobile stations (31, 32) that are in range in said wireless zone (41, 42, 43) and in-range management of mobile stations (31, 32) that are in range in said wireless zone; and
satellite gateway switching means that perform mutual connection between another communication network (20) and a mobile station (31, 32) that is in range in said wireless zone (41, 42, 43) through a communication satellite (61), wherein communication with said other communication network (20) is performed only via said communication satellite (61),
**characterized in that** said subscriber switching means (74) is provided with storage means (76) for storing the registration information and subscriber information of a mobile station that is in range in said wireless zone (41, 42, 43).

2. The mobile communication network forming device (10, 10a,..., 10e) according to claim 1, wherein said satellite gateway switching means (70) comprise:
satellite communication means (83) that perform transmission/reception of signals with the communication satellite;
signal processing means (81) that mutually convert signals transmitted to and received from said communication satellite and signals employed in said wireless zone; and
a gateway switching section (75) that performs signal processing when mutual connection with said other communication network is performed.

3. A mobile communication system including the mobile communication network forming device (10, 10a,...,10e) according to any of claims 1 through 2 and at least one mobile station (31, 32).

4. A method of forming a mobile communication network comprising the steps of:
forming a wireless zone (41, 42, 43);
performing in-range management of mobile stations (31,32) that are in range in said wireless zone (41,42,43) and connection exchange between mobile stations that are in range in said wireless zone;
performing mutual connection between another communication network (20) and a mobile station (31,32) that is in range in said wireless zone through a communication satellite (61), wherein communication with said other communication network (20) is performed only via said communication satellite (61); and
**characterized in the step of** storing registration information and subscriber information of a mobile station that is in range in said wireless zone (41,42,43) at storage means (76) of a subscriber switching means (74).

5. The method of forming a mobile communication network according to claim 4, comprising the steps of;
performing transmission/reception of signals to/from a communication satellite (61);
mutually converting signals transmitted to and received from said communication satellite (61) and signals employed in said wireless zone; and
performing signal processing when mutual connection with said other communication network (20) is performed.

6. The method of forming a mobile communication network according to claim 4 or 5, comprising a step of storing subscriber information and registration information of mobile stations (31, 32) in range in said wireless zone (41, 42, 43).

7. A program for causing a computer to execute;
processing for forming a wireless zone (41, 42, 43);
processing for performing in-range management of mobile stations (31,32) in range in said wireless zone (41, 42, 43) and connection exchange between mobile stations (31, 32) in range in said wireless zone (41, 42, 43);
processing for performing mutual connection between another communication network (20) and a mobile station (31,32) which is in range in said wireless zone (41, 42, 43) through a communication satellite (61), wherein communication with said other communication network (20) is performed only via said communication satellite (61); and
**characterized in**
processing for storing registration information and subscriber information of a mobile station that is in range in said wireless zone (41,42,43) at storage means (76) of a subscriber switching means (74).

8. The program according to claim 7 for causing the computer the execution of:
processing for performing transmission/reception of signals to/from a communication satellite (61);
processing for mutually converting signals transmitted to and received from said communication satellite (61) and signals employed in said wireless zone (41, 42, 43); and
processing of signals when mutual connection with said other communication network (20) is performed.

9. The program according to claim 8 or 9 for causing the computer the execution of processing for storing subscriber information and registration information of mobile stations (31, 32) in range in said wireless zone (41,42, 43).

10. A computer-readable storage medium on which the program according to any of claims 7 through 9 is recorded.

11. A method of forming a mobile communication network according to claim 4 comprising:
a connection request acceptance step accepting from a mobile station (31, 32) in range of a wireless zone (41,42,43) formed by a base station function section of a mobile communication network forming device (10, 10a,... 10e) a connection request for requesting connection with another communication terminal (30);
a in-range determination step determining whether said other communication terminal (30) is in range of said wireless zone (41,42,43) or not; and
a connection execution step executing the connection between said mobile station (31,32) and said other communication terminal (30) using a subscriber switching means in case said other communication terminal (30) is determined to be in range of said wireless zone in said in-range determination step, and executing the mutual connection between said mobile station (3,32) and other communication network (20) via a communication satellite (61) in case said other communication terminal is determined to be not in range of said wireless zone (41,42,43) in said in-range determination step, wherein communication with said other communication network (20) is performed only via said communication satellite (61).

12. The method of forming a mobile communication network according to claim 11, wherein the determination of said in-range determination step is carried out by referring to registration information and subscriber information stored in storage means (76).

13. A program for causing a computer to execute the method of forming a mobile communication network according to claim 11.

14. A computer-readable storage medium on which the program according to claim 13 is recorded.

## Patentansprüche

1. Mobilkommunikationsnetzwerk bildende Einrichtung (10, 10a, ..., 10e) aufweisend:
• eine Basisstation-Funktion-Sektion (71), die eine Drahtlos-Zone (41, 42, 43) bildet;
• Teilnehmer-Umschalte-Mittel (74), die Verbindungs-Austausch zwischen Mobilstationen (31, 32), die in Reichweite in der Drahtlos-Zone (41, 42, 43) sind, und In-Reichweiten-Verwaltung der Mobilstationen (31, 32), die in Reichweite in der Drahtlos-Zone sind, durchführen; und
• Satelliten-Netzübergangs-Umschalte-Mittel, die wechselseitige Verbindung zwischen einem anderen Kommunikations-Netzwerk (20) und einer Mobilstation (31, 32), die in Reichweite in der Drahtlos-Zone (41, 42, 43) ist, durch einen Kommunikations-Satelliten (61) durchführen, wobei Kommunikation mit dem anderen Kommunikations-Netzwerk (20) nur mittels des Kommunikations-Satelliten (61) durchgeführt wird,
**gekennzeichnet dadurch, dass**
• die Teilnehmer-Umschalte-Mittel (74) mit Speicher-Mitteln (76) ausgestattet sind zum Speichern der Registrierungsinformation und Teilnehmerinformation einer Mobilstation, die in Reichweite in der Drahtlos-Zone (41, 42, 43) ist.

2. Mobilkommunikationsnetzwerk bildende Einrichtung (10, 10a, ..., 10e) gemäß Anspruch 1,
wobei die Satelliten-Netzübergangs-Umschalte-Mittel (70) aufweisen:
• Satelliten-Kommunikations-Mittel (83), die Übertragen/ Empfangen von Signalen mit dem Kommunikations-Satelliten durchführen;
• Signalverarbeitungs-Mittel (81), die an den Kommunikations-Satelliten übertragene und von dem Kommunikations-Satelliten empfangene Signale und in der Drahtlos-Zone zum Einsatz kommende Signale wechselseitig konvertieren; und
• Netzübergangs-Umschalte-Sektion (75), die Signalverarbeitung durchführt, wenn wechselseitige Verbindung mit dem anderen Kommunikationsnetzwerk durchgeführt wird.

3. Mobilkommunikationssystem, enthaltend die Mobilkommunikationsnetzwerk bildende Einrichtung (10, 10a, ..., 10e) gemäß Anspruch 1 oder 2 und mindestens eine Mobilstation (31, 32).

4. Verfahren zum Bilden eines Mobilkommunikationsnetzwerks, aufweisend die Schritte des:
• Bildens einer Drahtlos-Zone (41, 42, 43);
• Durchführens von In-Reichweiten-Verwaltung der Mobilstationen (31, 32), die in Reichweite in der Drahtlos-Zone (41, 42, 43) sind, und Verbindungs-Austausch zwischen Mobilstationen, die in Reichweite in der Drahtlos-Zone sind;
• wechselseitiger Verbindung zwischen einem anderen Kommunikations-Netzwerk (20) und einer Mobilstation (31, 32), die in Reichweite in der Drahtlos-Zone ist, durch einen Kommunikations-Satelliten (61),
wobei Kommunikation mit dem anderen Kommunikations-Netzwerk (20) nur durch den Kommunikations-Satelliten (61) durchgeführt wird; und
**gekennzeichnet durch** den Schritt des
• Speicherns von Registrierungsinformation und Teilnehmerinformation einer Mobilstation, die in Reichweite in der Drahtlos-Zone (41, 42, 43) ist, in Speicher-Mitteln (76) von Teilnehmer-Umschalte-Mitteln (74).

5. Verfahren zum Bilden eines Mobilkommunikationsnetzwerks gemäß Anspruch 4,
aufweisend die Schritte des:
• Durchführens von Übertragen/ Empfangen von Signalen zu/ von dem Kommunikations-Satelliten (61);
• wechselseitigen Konvertierens von an den Kommunikations-Satelliten (61) übertragenen und von dem Kommunikations-Satelliten (61) empfangenen Signalen und in der Drahtlos-Zone zum Einsatz kommenden Signalen; und
• Durchführens von Signalverarbeitung, wenn wechselseitige Verbindung mit dem anderen Kommunikationsnetzwerk (20) durchgeführt wird.

6. Verfahren zum Bilden eines Mobilkommunikationsnetzwerks gemäß Anspruch 4 oder 5,
aufweisend einen Schritt des Speicherns von Teilnehmerinformation und Registrierungsinformation von Mobilstationen (31, 32), die in Reichweite in der Drahtlos-Zone (41, 42, 43) sind.

7. Programm, das einen Computer veranlasst, auszuführen:
• Verarbeitung zum Bilden einer Drahtlos-Zone (41, 42, 43);
• Verarbeitung zum Durchführen von In-Reichweiten-Verwaltung von Mobilstationen (31, 32), die in Reichweite in der Drahtlos-Zone (41, 42, 43) sind, und Verbindungs-Austausch zwischen Mobilstationen (31, 32), die in Reichweite in der Drahtlos-Zone (41, 42, 43) sind;
• Verarbeitung zum Durchführen von wechselseitiger Verbindung zwischen einem anderen Kommunikations-Netzwerk (20) und einer Mobilstation (31, 32), die in Reichweite in der Drahtlos-Zone (41, 42, 43) ist, durch einen Kommunikations-Satelliten (61), wobei Kommunikation mit dem anderen Kommunikations-Netzwerk (20) nur durch den Kommunikations-Satelliten (61) durchgeführt wird; und
**gekennzeichnet durch**
• Verarbeitung zum Speichern von Registrierungsinformation und Teilnehmerinformation einer Mobilstation, die in Reichweite in der Drahtlos-Zone (41, 42, 43) ist, in Speicher-Mitteln (76) von Teilnehmer-Umschalte-Mitteln (74).

8. Programm gemäß Anspruch 7, das einen Computer veranlasst, auszuführen:
• Verarbeitung zum Durchführen von Übertragen/ Empfangen von Signalen zu/ von dem Kommunikations-Satelliten (61);
• Verarbeitung zum wechselseitigen Konvertieren von an den Kommunikations-Satelliten (61) übertragenen und von dem Kommunikations-Satelliten (61) empfangenen Signalen und in der Drahtlos-Zone (41, 42, 43) zum Einsatz kommenden Signalen; und
• Verarbeitung zur Signalverarbeitung, wenn wechselseitige Verbindung mit dem anderen Kommunikationsnetzwerk (20) durchgeführt wird.

9. Programm gemäß Anspruch 8 oder 9, das einen Computer veranlasst, das Verarbeitung zum Speichern von Registrierungsinformation und Teilnehmerinformation von Mobilstationen (31, 32), die in Reichweite in der Drahtlos-Zone (41, 42, 43) sind, auszuführen.

10. Computerlesbares Speichermedium, auf welchem das Programm gemäß einem der Ansprüche 7 bis 9 gespeichert ist.

11. Verfahren zum Bilden eines Mobilkommunikationsnetzwerkes gemäß Anspruch 4, aufweisend:
• einen Verbindungs-Anforderung-Akzeptierungs-Schritt zum Akzeptieren einer Verbindungs-Anforderung von einer Mobilstation (31, 32), die in Reichweite einer durch eine Basisstation-Funktion-Sektion einer Mobilkommunikationsnetzwerk bildenden Einrichtung (10, 10a, ..., 10e) gebildeten Drahtlos-Zone (41, 42, 43) ist, zum Anfordern einer Verbindung mit einem anderen Kommunikationsendgerät (30);
• einen In-Reichweiten-Ermittlungs-Schritt zum Ermitteln, ob das andere Kommunikationsendgerät (30) in Reichweite der Drahtlos-Zone (41, 42, 43) ist oder nicht; und
• einen Verbindungs-Ausführungs-Schritt zum Ausführen der Verbindung zwischen der Mobilstation (31, 32) und des anderen Kommunikationsendgeräts (30) unter Verwendung von Teilnehmer-Umschalte-Mitteln für den Fall, dass in dem In-Reichweiten-Ermittlungs-Schritt ermittelt wurde, dass das andere Kommunikationsendgerät (30) in Reichweite der Drahtlos-Zone ist, und zum Ausführen der wechselseitigen Verbindung zwischen der Mobilstation (31, 32) und dem anderen Kommunikationsnetzwerk (20) mittels eines Kommunikations-Satelliten (61) in dem Fall, dass in dem In-Reichweiten-Ermittlungs-Schritt ermittelt wurde, dass das andere Kommunikationsendgerät nicht in Reichweite der Drahtlos-Zone (41, 42, 43) ist, wobei Kommunikation mit dem anderen Kommunikationsnetzwerk (20) nur über den Kommunikations-Satelliten (61) durchgeführt wird.

12. Verfahren zum Bilden eines Mobilkommunikationsnetzwerkes gemäß Anspruch 11,
wobei das Ermitteln des In-Reichweiten-Ermittlungs-Schritts durch Verweis auf in Speicher-Mitteln (76) gespeicherte Registrierungsinformation und Teilnehmerinformation ausgeführt wird.

13. Programm, das einen Computer veranlasst, das Verfahren zum Bilden eines Mobilkommunikationsnetzwerkes gemäß Anspruch 11 auszuführen.

14. Computerlesbares Speichermedium, auf welchem das Programm gemäß Anspruch 13 gespeichert ist.

## Revendications

1. Dispositif de formation de réseau de communication mobile (10, 10a, ... , 10e) comprenant :
une section de fonction de station de base (71) qui forme une zone sans fil (41, 42, 43) ;
des moyens de commutation d'abonné (74) qui effectuent un échange de connexion entre des stations mobiles (31, 32) qui sont à portée radio dans ladite zone sans fil (41, 42, 43) et une gestion de la portée radio de stations mobiles (31, 32) qui sont à portée radio dans ladite zone sans fil ; et
des moyens de commutation de passerelle par satellite qui effectuent une connexion mutuelle entre un autre réseau de communication (20) et une station mobile (31, 32) qui est à portée radio dans ladite zone sans fil (41, 42, 43) par l'intermédiaire d'un satellite de communication (61), une communication avec ledit autre réseau de communication (20) étanteffectuée uniquement via ledit satellite de communication (61),
**caractérisé en ce que** lesdits moyens de commutation d'abonné (74) sont pourvus de moyens de stockage (76) pour stocker les informations d'enregistrement et les informations d'abonné d'une station mobile qui est à portée radio dans ladite zone sans fil (41, 42, 43).

2. Dispositif de formation de réseau de communication mobile (10, 10a, ..., 10e) selon la revendication 1, **caractérisé en ce que** lesdits moyens de commutation de passerelle par satellite (70) comprennent :
des moyens de communication par satellite (83) qui effectuent la transmission/réception de signaux avec le satellite de communication ;
des moyens de traitement de signaux (81) qui convertissent mutuellement les signaux transmis audit et reçus dudit satellite de communication et les signaux employés dans ladite zone sans fil ; et
une section de commutation de passerelle (75) qui effectue un traitement de signaux lorsqu'une connexion mutuelle avec ledit autre réseau de communication est effectuée.

3. Système de communication mobile incluant le dispositif de formation de réseau de communication mobile (10, 10a, ..., 10e) selon l'une quelconque des revendications 1 à 2 et au moins une station mobile (31, 32).

4. Procédé de formation d'un réseau de communication mobile comprenant les étapes consistant à :
former une zone sans fil (41, 42, 43) ;
effectuer une gestion à distance de stations mobiles (31, 32) qui sont à portée radio dans ladite zone sans fil (41, 42, 43) et un échange de connexion entre les stations mobiles qui sont à portée radio dans ladite zone sans fil ;
effectuer une connexion mutuelle entre un autre réseau de communication (20) et une station mobile (31, 32) qui est à portée radio dans ladite zone sans fil par l'intermédiaire d'un satellite de communication (61), une communication avec ledit autre réseau de communication (20) étant effectuée uniquement via ledit satellite de communication (61) ; et
**caractérisé par** l'étape consistant à stocker des informations d'enregistrement et des informations d'abonné d'une station mobile qui est à portée radio dans ladite zone sans fil (41, 42, 43) au niveau de moyens de stockage (76) de moyens de commutation d'abonné (74).

5. Procédé de formation d'un réseau de communication mobile selon la revendication 4, comprenant les étapes consistant à :
effectuer la transmission/réception de signaux vers/depuis un satellite de communication (61) ;
convertir mutuellement les signaux transmis audit et reçus dudit satellite de communication (61) et les signaux employés dans ladite zone sans fil ; et
effectuer un traitement de signaux lorsqu'une connexion mutuelle avec ledit autre réseau de communication (20) est effectuée.

6. Procédé de formation d'un réseau de communication mobile selon la revendication 4 ou 5, comprenant une étape consistant à stocker des informations d'abonné et des informations d'enregistrement de stations mobiles (31, 32) à portée radio dans ladite zone sans fil (41, 42, 43).

7. Programme pour amener un ordinateur à exécuter :
un traitement pour former une zone sans fil (41, 42, 43) ;
un traitement pour effectuer une gestion à distance de stations mobiles (31, 32) à portée radio dans ladite zone sans fil (41, 42, 43) et un échange de connexion entre des stations mobiles (31, 32) à portée radio dans ladite zone sans fil (41, 42, 43) ;
un traitement pour effectuer une connexion mutuelle entre un autre réseau de communication (20) et une station mobile (31, 32) qui est à portée radio dans ladite zone sans fil (41, 42, 43) par l'intermédiaire d'un satellite de communication (61), une communication avec ledit autre réseau de communication (20) étant effectuée uniquement via ledit satellite de communication (61) ; et
**caractérisé par**
un traitement pour stocker des informations d'enregistrement et des informations d'abonné d'une station mobile qui est à portée radio dans ladite zone sans fil (41, 42, 43) au niveau de moyens de stockage (76) de moyens de commutation d'abonné (74).

8. Programme selon la revendication 7 pour amener l'ordinateur à exécuter :
un traitement pour effectuer la transmission/réception de signaux vers/depuis un satellite de communication (61) ;
un traitement pour convertir mutuellement les signaux transmis audit et reçus dudit satellite de communication (61) et les signaux employés dans ladite zone sans fil (41, 42, 43) ; et
un traitement de signaux lorsqu'une connexion mutuelle avec ledit autre réseau de communication (20) est effectuée.

9. Programme selon la revendication 8 ou 9 pour amener l'ordinateur à exécuter un traitement pour stocker des informations d'abonné et des informations d'enregistrement de stations mobiles (31, 32) à portée radio dans ladite zone sans fil (41, 42, 43).

10. Support de stockage lisible par ordinateur sur lequel le programme selon l'une quelconque des revendications 7 à 9 est enregistré.

11. Procédé de formation d'un réseau de communication mobile selon la revendication 4, **caractérisé en ce qu'**il comprend :
une étape d'acceptation de demande de connexion acceptant de la part d'une station mobile (31, 32) à portée radio d'une zone sans fil (41, 42, 43) formée par une section de fonction de station de base d'un dispositif de formation de réseau de communication mobile (10, 10a, ...10e) une demande de connexion pour demander la connexion avec un autre terminal de communication (30) ;
une étape de détermination à distance déterminant si ledit autre terminal de communication (30) est à portée radio dans ladite zone sans fil (41, 42, 43) ou non ; et
une étape d'exécution de connexion exécutant la connexion entre ladite station mobile (31, 32) et ledit autre terminal de communication (30) en utilisant des moyens de commutation d'abonné dans le cas où ledit autre terminal de communication (30) est déterminé comme étant à portée radio dans ladite zone sans fil à ladite étape de détermination à distance, et exécutant la connexion mutuelle entre ladite station mobile (31, 32) et ledit autre réseau de communication (20) via un satellite de communication (61) dans le cas où ledit autre terminal de communication est déterminé comme n'étant pas à portée radio de ladite zone sans fil (41, 42, 43) à ladite étape de détermination à distance, une communication avec ledit autre réseau de communication (20) étant effectuée uniquement via ledit satellite de communication (61).

12. Procédé de formation d'un réseau de communication mobile selon la revendication 11, **caractérisé en ce que** la détermination de ladite étape de détermination à distance est effectuée en se référant aux informations d'enregistrement et aux informations d'abonné stockées dans les moyens de stockage (76).

13. Programme pour amener un ordinateur à exécuter le procédé de formation d'un réseau de communication mobile selon la revendication 11.

14. Support de stockage lisible par ordinateur sur lequel le programme selon la revendication 13 est enregistré.
